(19) Europäisches Patentamt
European Patent Office
Office européen des brevets

(11) Publication number: **0 031 223**
**B1**

(12) # EUROPEAN PATENT SPECIFICATION

(45) Date of publication of patent specification: 13.06.84

(51) Int. Cl.³: C 01 B 25/38, C 08 K 7/04, D 01 F 9/08

(21) Application number: 80304484.1

(22) Date of filing: 12.12.80

(54) **Crystalline calcium sodium or lithium phosphate having an asbestos-like form, a process for its preparation and composites of organic polymeric material containing it.**

(30) Priority: 14.12.79 US 103787
27.05.80 US 153664

(43) Date of publication of application:
01.07.81 Bulletin 81/26

(45) Publication of the grant of the patent:
13.06.84 Bulletin 84/24

(84) Designated Contracting States:
AT BE CH DE FR GB IT LI LU NL SE

(56) References cited:
EP - A - 0 004 974
DE - B - 2 738 415
GB - A - 1 271 529
US - A - 3 846 527

(73) Proprietor: MONSANTO COMPANY
Patent Department 800 North Lindbergh Boulevard
St. Louis, Missouri 63166 (US)

(72) Inventor: Griffith, Edward Jackson
310 Coventry Lane
Manchester Missouri 63011 (US)

(74) Representative: Lunt, John Cooper et al,
Monsanto Europe S.A. Patent Department Avenue de Tervuren 270-272 Letter Box No 1
B-1150 Brussels (BE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 031 223 B1

## Description

This invention relates to a new crystalline form of calcium M phosphate where M is sodium or lithium and a process for its preparation. More particularly, this invention relates to unique crystalline calcium M phosphate having the form of very thin, flexible fibres and to a process for preparing such crystals which have the form or appearance of asbestos.

Each year billions of kilograms of asbestos, fiberglass and other inorganic fibers are used in a wide variety of applications, such as for composites with organic polymeric materials like plastics, resins, natural and synthetic elastomers and the like. Such composites are used to make floor tiles, gaskets, brake linings, clutch facings and numerous other objects commonly found in industry and in the home.

Although satisfactory performance is achieved by the use of such fibrous materials in these applications, they also have certain disadvantages. For example, many of these fibrous materials, especially asbestos, are suspected of causing a rare cancer, mesothelioma, as well as other diseases, such as asbestosis, bronchogenic cancer and gastrointestinal cancer (see, for example, "Asbestos-Related Disease", L. Preges et al., Grune and Stratton, New York, 1978 and "Asbestos-Properties, Applications and Hazards", Editor, L. Michaels et al., John Wiley and Sons, New York, 1979). In addition, many inorganic fibers, such as the alkali metal titanates, are suspected of causing such health problems among users of the fibers. On the other hand, some inorganic fibers are soluble in water, dilute acid or dilute alkali which limits the usefulness of such fibers.

Condensed phosphates are the only known variety of inorganic substances which are capable of forming fibers and at the same time are normally found in living systems. J. R. VanWazer reports in "Phosphorus And Its Compounds", Vol. 1, Interscience Publishers, Inc., New York (1959) at pages 456 and 800 that long chain phosphates have been identified in yeast, molds, algae and bacteria. An enzymatic synthesis of long chain phosphate salts has been described and is believed to occur by donation of the terminal $PO_4$ group of adenosine triphosphate. Although there is still much to be learned about the various phosphatases which catalyze the schism of the P—O—P linkages, it is known that the enzymatic hydrolysis of chain and ring compounds can be extremely rapid in the presence of dipositive cations, such as calcium and especially magnesium. Hence, a fiber or crystal which can degrade to a nutrient in the body while remaining stable in the absence of enzymes should create no health problems and should be suitable for many applications where fibrous materials are needed.

Those skilled in the art are aware that fibers can be prepared by drawing a fiber from a glassy phosphate or that certain phosphates, such as crystalline potassium metaphosphate, sometimes called potassium Kurrol's salt, form acicular crystals. However, the usefulness of such amorphous or crystalline fibers is limited because of their solubility in aqueous systems and/or low tensile strength. In addition, such fibers are frequently too large to use for numerous applications.

Thus, it can be seen that there is a need for an inorganic fibrous material that can be prepared in very small diameters and relatively short lengths and which can withstand temperatures up to 725°C. for use an insulation and as a reinforcing aid in polymeric materials, which is virtually insoluble in water, dilute acid or dilute alkali, and which does not present undue health hazards to those using the material. Now, according to the present invention, an inorganic crystal having an asbestos-like form has been developed which can have an average diameter of less than 1 micrometer and which has most of the advantageous properties of other known fibrous materials within this size range. However, unlike most other inorganic fibers, the crystal of the present invention is attacked by enzymes of biological systems which not only renders the hydrolysis products relatively harmless to mammals, such as humans, but also provides nutrients to the biological system.

These and other advantages are achieved by crystalline calcium M phosphate wherein M is sodium or lithium having an asbestos-like form, the fibrous crystals having a length to average diameter ratio of at least 5:1, the calcium sodium phosphate having characteristic d-spacings at about 5.29, 4.82, 3.39 and 3.15 Angstroms, and the calcium lithium phosphate having characteristic d-spacings at about 4.75, 3.59, 3.40 and 3.054 Angstroms.

Such asbestos-like crystals are very thin, flexible fibers which are insoluble in water, are acid-, alkali- and temperature-resistant. The asbestos-like crystalline calcium sodium phosphate has a melting point of about 780°C and the calcium lithium phosphate has a melting point of about 750°C.

Such asbestos-like crystalline calcium M phosphates, where M is sodium or lithium, can be produced by a process which comprises:

(a) bringing together under reaction conditions a source of oxygen, calcium, phorphorus and M wherein the mole ratios are 15 mole percent to 30 mole percent $M_2O$, 48 mole percent to 60 mole percent $P_2O_5$ and 20 mole percent to 37 mole percent CaO to form a phosphate salt mixture;

(b) maintaining the phosphate salt mixture at a temperature below about the melting point of the calcium M phosphate for a sufficient time to form blocks of calcium M phosphate; and

(c) fiberizing the blocks into asbestos-like crystals.

### DESCRIPTION OF THE FIGURE

The sole figure in this application is a picture taken with the aid of an electron scanning

microscope at a magnification of 1000 times of a typical crystalline calcium sodium phosphate of the present invention prepared according to the process described below.

DETAILED DESCRIPTION OF THE INVENTION

Preparation

The preparation of the asbestos-like crystalline calcium M phosphate of the present invention depends on a number of factors as will occur to those skilled in the art in view of the present disclosure. The ratio of calcium to phosphorus and the ratio of sodium or lithium to phosphorus in the melt is important. In addition, the concentration and types of impurities can affect crystal shape and growth. Other important variables are time and temperature at which the phosphate salt mixture is maintained, the recovery techniques and the like.

Any number of materials known to those skilled in the art can be used as a source of oxygen, calcium, phosphorus and sodium or lithium to prepare the asbestos-like crystalline calcium M phosphate. Suitable sources of calcium include calcium phosphates and basic calcium-containing materials, such as calcium carbonate, calcium oxide, calcium hydroxide and mixtures thereof, including mixtures commonly known as slaked lime, quick lime, hydrated lime and the like. Suitable sources of phosphorus include phosphorus pentoxide, phosphoric acid and orthophosphate salts such as sodium or lithium dihydrogen phosphate, disodium hydrogen phosphate, trisodium or trilithium phosphate, the sodium or lithium salts of condensed phosphates which contain at least one P—O—P linkage, such as the metaphosphates, the pyrophosphates, glassy phosphates and the like. Mixtures of salts, acids or oxides can be used in any combination. Suitable sources of sodium or lithium include the sodium or lithium orthophosphates and condensed phosphates, such as those discussed above, and sodium or lithium hydroxide and sodium or lithium carbonate, and the like. It is usual to avoid the presence of large amounts of anions other than carbonates, hydroxides and phosphates, since the presence of more than trace amounts of such anions as sulfates, halides and the like may affect the growth of the crystals.

The mole ratio of sodium or lithium, calcium and phosphorus is important in the process to prepare crystalline calcium M phosphates of the present invention. Referring now to the ternary listing of $P_2O_5$, CaO and $M_2O$, where M is sodium or lithium, asbestiform crystals can be formed within the composition ranges set forth below wherein the compositions are in mole percent.

| $M_2O$ | $P_2O_5$ | CaO |
|---|---|---|
| 30—25 | 50 | 20—25 |
| 20 | 48—60 | 20—32 |
| 15 | 48—55 | 30—37 |

Although a few asbestos-like crystals can be obtained when using compositions outside of the above ranges, these compositions provide at least 10 weight percent asbestos-like crystals using the process of the present invention. It is preferred to use compositions where greater amounts of asbestos-like crystals can be obtained, for example, at least 50 weight percent, which is obtained when at least 17 mole percent $M_2O$ is used along with 48 mole percent to 54 mole percent $P_2O_5$, the remainder being CaO. It is preferred to use 20 mole percent to 25 mole percent $M_2O$, 48 mole percent to 53 mole percent $P_2O_5$, and 25 mole percent to 32 mole percent CaO.

The purity of the materials used as a source of phosphorus, calcium and sodium or lithium affects the yield of the asbestos-like crystalline calcium M phosphate. In some cases, if the impurity concentration is suffciently high, only a glass will be obtained. It is preferred to use reagent grade materials to control the level of impurities. On the other hand, when certain levels of impurities are present, on the order of 250 to 1,000 ppm, the morphology of the calcium M phosphate crystals is modified and in many cases the use of certain impurities is desired to provide asbestos-like crystalline calcium M phosphate with desired physical characteristics. For example, it is believed that trace levels, of aluminum, zinc, molybdenum, cobalt, copper, silver, cesium, silicon, magnesium, iron, nickel, vanadium and the like may enhance the physical characteristics of the resultant asbestos-like crystals. However, trace quantities of boron or titanium can inhibit the formation of asbestos-like crystals and the presence of such trace elements is not preferred.

According to the present invention, the materials used as a source of phosphorus, calcium, M and oxygen are brought together in proportions to provide the ratios described above, and heated to form a mixture of the phosphate salts. Although satisfactory results are achieved when the source materials are substantially dry, sufficient water can be found to form a paste or thick slurry of the source materials to aid in mixing. The source material, with or without the added water, can be placed in a suitable container, such as a platinum dish or ceramic crucible, and heated to temperatures up to 200°C. to evaporate excess moisture. Thereafter, the source materials are heated to temperatures

usually between 500°C. and 1200°C., and maintained at such temperatures for a sufficient length of time to insure that the materials have reacted, usually about one hour. When an open container is used, excessive times at temperatures above 800°C. where the salts are molten can change the ratio of calcium, phosphorus and M since phosphates can evaporate at such temperatures, and hence, it is preferred to heat the materials for less than about two hours in an open container. On the other hand, hot phosphorus pentoxide obtained by burning elemental phosphorus, lime or calcium carbonate, and sodium or lithium hydroxide or carbonate can be reacted together in the mole ratios described above, and the heats of reaction can be sufficient to form a phosphate salt mixture in an insulated container.

Then, the mixture of phosphate salts is maintained at a temperature below the melting point of calcium M phosphate, about 780°C. for calcium sodium phosphate and for calcium lithium phosphate, about 750°C. for a sufficient time to form blocks of calcium M phosphate. The temperature should not be allowed to drop below 500°C. since the sodium or lithium phosphate salts formed in the melt will become so viscous that the growth of blocks of calcium M phosphate is retarded. It is preferred to maintain the temperature between 550°C. and 750°C.

The temperature is maintained in the range of from 500°C. to the melting point of the asbestos-like crystal for a period of time between 20 minutes and 2 hours to permit hexagonally shaped blocks of calcium M phosphate to grow in a matrix of soluble M phosphate. The length of time is dependent on the temperature and the size of the desired crystal.

Then, the resulting mass is allowed to cool to 100 C. or less, and the mass is contacted with water to dissolve the soluble M phosphate. I prefer to break the resulting mass into pieces ranging from one centimeter to 10 centimeters average diameter, and place the pieces in at least 10 times its volume of agitated, warm water. When the soluble M phosphate is dissolved, the calcium M phosphate blocks having somewhat of a hexagonal shape, are left. The calcium M phosphate blocks are recovered by conventional means, e.g., decantation, filtration, centrifugation and the like.

The recovered calcium M phosphate blocks are then fiberized to form the crystalline calcium M phosphate of the present invention. The blocks can be fiberized by conventional techniques such as grinding, crushing, levigating, titurating and the like. I prefer to use a mortar and pestle for small batches, but to pass larger batches through a hammermill, or through a wet ball mill or roller mill, to fiberize the blocks to yield the crystalline calcium M phosphate of the present invention.

The length and diameter of the asbestos-like, crystalline calcium M phosphate is affected by a number of factors, such as: (1) the ratio of the source materials; (2) the type and quantity of trace elements; (3) the size of the blocks of calcium M phosphate; (4) the temperature at which the blocks are formed; (5) the degree of fiberization, and the like. All of these factors and others are interrelated and optimum conditions for preparing the asbestos-like crystals with the desired diameter and length for a particular application can be determined by routine experimentation in light of the present disclosure.

Characterization of the Asbestos-like Crystals

The crystalline calcium M phosphate grown according to the process of the present invention is fairly uniform from batch to batch. As noted above, the length and diameter of the asbestos-like crystals depends on the size of the block of calcium M phosphate, the degree of fiberization, composition of the melt and the like. Generally, crystals with the shorter lengths are obtained from melt compositions containing more than 20 mole percent $M_2O$. The average diameter of the crystals at 0.1 micrometer can be obtained with ease, and average diameters as small as about 0.05 micrometer can be obtained when care is used. At lower concentrations of M, crystals having an average diameter of about 1 micrometer, or larger, can be obtained, and a typical batch will provide crystals having an average diameter between about 0.1 micrometer and about 1.0 micrometer. In all cases, the aspect ratio (the length to average diameter ratio) of the fibers of crystalline calcium M phosphate is at least 5:1, usually at least 10:1, and frequently at least 50:1. Lengths as much as one centimeter have been obtained.

The asbestos-like crystalline calcium M phosphate of the present invention has good thermal stability and inertness. The crystals are reasonably resistant to corrosion in water, 0.1 normal sodium hydroxide and 0.1 normal hydrochloric acid.

The X-ray diffraction pattern of the asbestos-like crystalline calcium M phosphate using CuK$\alpha$ radiation was obtained. These diffraction patterns and the d-spacings in Angstroms (A) for the asbestos-like crystalline calcium sodium phosphate and calcium lithium phosphate are presented in Table 1.

TABLE 1

X-Ray Diffraction Patterns of Asbestiform Crystalline Calcium M Phosphate

| Calcium Sodium Phosphates | | Calcium Lithium Phosphates | |
|---|---|---|---|
| Peaks (°2$\theta$) | d-spacing (A) | Peaks (°2$\theta$) | d-spacing (A) |
| 13.4 | 6.59 | 13.5 | 6.54 |
| 16.7 | 5.29 | 18.6 | 4.75 |
| 18.3 | 4.82 | 24.6 | 3.59 |
| 23.4 | 3.77 | 26.0 | 3.40 |
| 23.6 | 3.74 | 27.6 | 3.19 |
| 26.0 | 3.39 | 27.8 | 3.18 |
| 27.0 | 3.27 | 28.7 | 3.076 |
| 27.5 | 3.21 | 28.9 | 3.054 |
| 28.0 | 3.15 | 29.9 | 2.952 |
| 29.6 | 2.982 | 31.65 | 2.789 |
| 31.1 | 2.838 | 37.3 | 2.366 |
| 34.1 | 2.589 | 49.0 | 1.801 |
| 35.9 | 2.459 | | |
| 42.6 | 2.072 | | |
| 48.5 | 1.820 | | |
| 55.1 | 1.602 | | |

The above X-ray diffraction patterns characterize the asbestiform crystals and distinguish them from the acicular crystalline calcium metaphosphate of the European application EP—A—0 031 222.

The asbestos-like calcium sodium phosphate crystals have characteristic d-spacings at 5.29, 4.82, 3.39 and 3.15A, whereas the asbestos-like calcium lithium phosphate crystals have characteristic d-spacings at 4.75, 3.59, 3.40 and 3.054A.

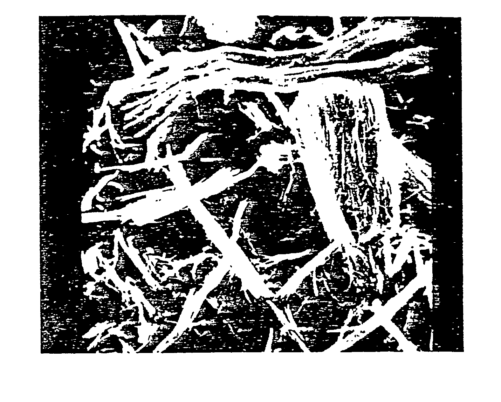

Figure 1 is a picture taken with the aid of an electron scanning microscope at a magnification of 1,000 times of a typical batch of asbestiform crystalline calcium sodium phosphate of the present invention showing, in addition to the asbestos-like crystals, typical small bundles which have not been fully fiberized.

Uses of the Asbestos-like Crystals

Because of their unusual chemical and physical properties, the crystalline calcium M phosphates of the present invention can find a wide variety of uses. For example, mats or felts of the asbestos-like crystals are readily obtained by suspending the crystals in a liquid, such as water or a glycerin-water mixture, followed by removal of the dispersing liquid. The mats or felts are useful as filters to remove solids from gaseous or liquid streams. Finely fiberized crystals can be incorporated with oils such as silicone oil to provide thick greases useful as high temperature lubricants. The crystals are good thermal insulators, and are also useful as reinforcing agents for cellulosic fibers and papers.

The crystals of the present invention are also useful as a partial or complete substitute for asbestos in asbestos/cement mixtures to make reinforced cement products. Up to 70 weight percent asbestos-like crystals, based on the weight of cement present, provides a reinforced cement product without the health hazard of asbestos fibers.

In addition, the crystals can be incorporated into oil-based and latex paints to alter the rheological and drying properties of such paints, and it is believed that they will enhance flame retardant properties of the resulting paint.

The crystalline calcium M phosphates of the present invention are particularly useful to form laminates and composites with organic polymeric materials. Depending upon the intended use and physical properties desired, from 1 percent to 99 percent by weight of the composite or laminate can be the asbestos-like crystals. Preferred compositions can readily be determined by routine experimentation by those skilled in the art. Suitable organic polymeric materials which can be used with the crystals to form laminates or composites include: styrene-acrylonitrile-butadiene; acetal copolymers and homopolymers; acrylic ester homopolymers and copolymers; allyl esters, such as diallyl phthalate, diallyl isophthalate, allyl diglycol carbonate and the like; alkyd molding compounds which comprise unsaturated polyester prepolymer, unsaturated monomer, and a source of free radicals; amino plastics prepared by reacting an amino compound, such as melamine or urea, with formaldehyde; cellulosic plastics, such as cellulose nitrate, ethyl cellulose, cellulose acetate, cellulose butyrate, and the like; epoxy resins, such as the reaction product of epichlorohydrin and bisphenol A, and the like; nylons, i.e., long-chain synthetic polymeric amides with recurring amide groups as an integral part of the main polymer chain, such as the nylons prepared by reacting equimolar amounts of hexamethylene diamine and adipic acid, sebacic acid or dodecanoic acid, and the like; phenolic resins such as the phenolformaldehyde type resins; poly(amideimide) plastics such as those prepared by the condensation of trimellitic anhydride and various aromatic diamines; polyolefins, such as polyethylene, polypropylene, polybutylene and the like; polyesters such as the condensation product of 1,4-butanediol and terephthalates with ethylene glycol, and the like; polyurethanes, polyvinyl and vinyl copolymers such as polyvinyl chloride and the like; polystyrene and polystyrene resins such as styrene-acrylonitrile and the like; thermoplastic elastomers such as styrene-elastomer block copolymers, urethane block copolymers, polyester block copolymers, polyolefin blends, and the like; and alloys prepared by mixing two or more polymers together by mechanical means. Other examples will occur to those skilled in the art in light of the above listing, which is intended to be instructive and not limiting.

This invention is illustrated by, but not limited to, the following Examples wherein all percentages are given by weight unless otherwise indicated.

In the following Examples parts and percentages are by weight unless otherwise specified.

Example I

To 76.29 grams of calcium carbonate were added 150 milliliters water, 148.15 grams of monosodium dihydrogen phosphate monohydrate and 232.14 grams of 85 percent phosphoric acid. The mole ratio of ingredients was 19.0 percent $Na_2O$, 28 percent CaO and 53.0 percent $P_2O_5$. The above ingredients were thoroughly mixed in a container, a 1000 $cm^3$ glass beaker which was placed on a hot plate to evaporate excess moisture. Then, a 500 $cm^3$ platinum dish containing the above mixture was placed in a furnace at about 200°C. for 80 minutes to drive off residual moisture. Then the temperature was increased to 800°C. and maintained at that temperature for 1 hour. Thereafter, the temperature was decreased to 600°C. and maintained at this temperature for 1 hour. The platinum dish and the contents were allowed to cool to about 100°C. and the contents were transferred to a 4-liter beaker containing about 2 liters of boiling water. After about 3 hours, hexagonally shaped blocks were recovered by filtration. The blocks were washed with water and methanol, and ground in a mortar and pestle to fiberize the blocks into asbestos-like crystals.

A sample of the crystals was analyzed by atomic absorption spectrophotometry, and the resultant elemental analysis confirmed a structure of

$$[CaNa(PO_3)_3]_n$$

of high molecular weight.

Example II

To 72.35 grams of calcium carbonate were added a heated mixture of 300 milliliters water, 96.59 grams of lithium metaphosphate and 189.38 grams of 86 percent phosphoric acid. The mole ratio of ingredients was 21.0 percent $Li_2O$, 28 percent CaO and 52.0 percent $P_2O_5$. The above ingredients were thoroughly mixed in a container, a 1000 $cm^3$ glass beaker, which was placed on a hot plate to evaporate excess moisture. Then, a 500 $cm^3$ platinum dish containing the above mixture was placed in a furnace at about 200°C. for 20 minutes to drive off residual moisture. Then the temperature was gradually increased to 790°C. to form melt. Then the temperature was reduced to about 700°C. and maintained over the weekend. The platinum dish and the contents were allowed to cool to about 100°C. and the contents were transferred to a 4-liter beaker containing about 2 liters of boiling water. After about 3 hours, hexagonally shaped blocks were recovered by filtration. The blocks were washed with water and methanol, and ground in a mortar and pestle to fiberize the blocks into asbestos-like crystals.

A sample of the crystals was analyzed by atomic absorption spectrophotometry, and the resultant elemental analysis confirms a structure of

$$[CaLi(PO_3)_3]_n$$

of high molecular weight.

Following the general procedures of Examples I and II, crystalline calcium M phosphates having an asbestos-like form were prepared from various mole percent compositions at various initial melt temperatures and crystallization temperatures. Representative examples are set forth in the following Table 2.

TABLE 2

| | Mole Percent | | | | Temperature | |
|---|---|---|---|---|---|---|
| Example | $Na_2O$ | $Li_2O$ | $P_2O_5$ | CaO | °C* | °C** |
| III | 19 | — | 53 | 28 | 700 | 700 |
| IV | — | 17 | 50 | 33 | 850 | 745 |
| V | 21 | — | 52 | 27 | 1000 | 690 |
| VI | 20 | — | 60 | 20 | 650 | 450 |
| VII | — | 19 | 50 | 31 | 850 | 700 |
| VIII | 23 | — | 51 | 26 | 850 | 650 |
| IX | 17 | — | 50 | 33 | 840 | 760 |
| X | 21 | — | 52 | 27 | 800 | 600 |
| XI | 21 | — | 52 | 27 | 800 | 600 |
| XII | 21 | | 52 | 27 | 800 | 600 |

* Initial melt temperature
** Crystallization temperature

A representative sample of crystals of Example X was analyzed by atomic absorption spectrophotometry. Found: Ca 13.12 percent; Na 6.80 percent; P 30.49 percent; Fe 167 ppm. Calculated: Ca 13.36 percent; Na 7.66 percent; P 30.98 percent.

Representative samples of the crystals of Examples IX were evaluated for tensile strength and Young's modulus. In two separate evaluations the tensile strength was in the range of 97 to 114 $kg/mm^2$ and the Young's modulus was in the range of 9,700 to 11,000 $kg/mm^2$.

About 15 grams of each of the crystals from Examples I and II were separately admixed with an epoxy resin and curing agent, namely Epon 828 and curing agent 2, available commercially from Shell Oil Company, Houston, Texas. Bars about 1 centimeter deep, 3 centimeters wide and 5 centimeters long were cast from the mixtures. For comparative purposes, epoxy resin without reinforcement was cast into similar bars. Then the bars were pulled on an Instron Tensile Testing machine until break occurred. At this 25 percent volume loading, the breaking load doubled over the epoxy resin that did not contain the crystalline calcium M phosphate.

The crystals from Example XII were fiberized using a hammermill. The crystals in an amount to provide 15 percent by volume were admixed with an epoxy resin and curing agent, namely EPON 815 and curing agent 2, available commercially from Shell Oil Company, Houston, Texas. Cured test strips, with the crystals and without reinforcement, averaging about 2.1 mm. thick, about 13.2 mm. wide and about 76.2 mm. long were tested for tensile modulus and flexual modulus using an Instron Tensile Testing machine, at a span of about 50.8 mm. An average tensile modulus of 506 $kg/mm^2$ and an average flexual modulus of 580 $kg/mm^2$ were obtained for this 15 percent loading of the crystals compared to an average tensile modulus of 321 $kg/mm^2$ and an average flexual modulus of 366 $kg/mm^2$ for the cured epoxy resin without the crystals.

**Claims**

1. Crystalline calcium M Phosphate wherein M is sodium or lithium having an asbestos-like form, the fibrous crystals having a length to average diameter ratio of at least 5:1, the calcium sodium phosphate having characteristic d-spacings at about 0.529, 0.482, 0.339 and 0.315 nm (5.29, 4.82, 3.39 and 3.15 Angstroms), and the calcium lithium phosphate having characteristic d-spacings at about 0.475, 0.359, 0.340, and 0.3054 nm (4.75, 3.59, 3.40 and 3.054 Angstroms).

2. A phosphate of Claim 1 wherein the length to average diameter ratio of the crystals is at least 10:1.

3. A phosphate of Claim 2 wherein the length to average diameter ratio of the crystals is at least 50:1.

4. A phosphate of Claim 2 wherein the crystals have an average diameter between 0.05 micrometer and 1 micrometer.

5. A phosphate of Claim 4 wherein the crystals have an average diameter between 0.1 micrometer and 0.5 micrometer.

6. A process for preparing crystalline calcium M phosphate as defined in Claim 1, which process comprises:

(a) bringing together under reaction conditions a source of oxygen, calcium, phosphorus and M wherein the mole ratios are 15 mole percent to 30 mole percent $M_2O$, 48 mole percent to 60 mole percent $P_2O_5$, and 20 mole percent to 37 mole percent CaO to form a melt of a phosphate salt mixture;

(b) maintaining the phosphate salt mixture at a temperature below the melting point of the calcium M phosphate for a sufficient time to form blocks of calcium M phosphate; and

(c) fiberizing the blocks.

7. A process of Claim 6 wherein the melt has a mole ratio of 17 mole percent to 25 mole percent $M_2O$, 48 mole percent to 53 mole percent $P_2O_5$, and 25 mole percent to 32 mole percent CaO.

8. A process of either of Claims 6 and 7 wherein the blocks of calcium M phosphate are separated from other salts by contacting the phosphate salt mixture with water after the blocks of calcium M phosphate have formed.

9. A process of any of Claims 6 to 8 wherein the source of calcium is calcium carbonate or calcium hydroxide, and the source of phosphorus is a sodium or lithium phosphate, phosphoric acid or mixtures thereof.

10. A process of any of Claims 6 to 9 wherein the phosphate salt mixture is maintained between 500°C and 780°C.

11. A process of Claim 10 wherein the phosphate salt mixture is maintained between 550°C and 750°C.

12. A composite which comprises from 1 to 99 percent by weight crystalline calcium M phosphate as defined in Claim 1, and from 1 to 99 percent by weight organic polymeric material.

**Revendications**

1. Phosphate de calcium et de M cristallin où M est le sodium ou le lithium ayant une forme du genre amiante, les cristaux fibreaux ayant un rapport longueur/diamètre moyen d'au moins 5:1, le phosphate de calcium et de sodium ayant des espacements d caractéristique à environ 0,529, 0,482, 0,339 et 0,315 nm (5,29, 4,82, 3,39 et 3,15 Angstroms) et le phosphate de calcium et de lithium ayant des espacements d caractéristiques à environ 0,475, 0,359, 0,340 et 0,3054 nm (4,75, 3,59, 3,40 et 3,054 Angstroms).

2. Phosphate selon la revendication 1, dans lequel le rapport longueur/diamètre moyen des cristaux est au moins 10:1.

3. Phosphate selon la revendication 2 dans lequel le rapport longueur/diamètre moyen des cristaux est au moins 50:1.

4. Phosphate selon la revendication 2, dans lequel les cristaux ont un diamètre moyen compris entre 0,05 micromètre et 1 micromètre.

5. Phosphate selon la revendication 4, dans lequel les cristaux ont un diamètre moyen compris entre 0,1 micromètre et 0,5 micromètre.

6. Procédé pour préparer du phosphate de calcium et de M cristallin comme défini dans la revendication 1, ce procédé consistant:

(a) à amener ensemble dans des conditions réactionneles une source d'oxygène, de calcium, de phosphore et de M où les rapports molaires sont 15 % en mole à 20 % en mole de $M_2O$, 48 % en mole à 60 % en mole de $P_2O_5$ et 20 % en mole à 37 % en mole de CaO pour former une masse fondue d'un mélange de sels constitués de phosphates;

(b) à maintenir le mélange de sels constitués de phosphates à une température en-dessous du point de fusion du phosphate de calcium et de M pendant un temps suffisant pour former des blocs de phosphate de calcium et de M; et

(c) à transformer en fibres les blocs.

7. Procédé selon la revendication 6 dans lequel la masse fondue a un rapport molaire de 17 % en mole à 25 % en mole de $M_2O$, de 48 % en mole à 53 % en mole de $P_2O_5$, et de 25 % en mole à 32 % en mole de CaO.

8. Procédé selon l'une ou l'autre des revendications 6 et 7, dans lequel les blocs de phosphate de calcium et de M sont séparés d'autres sels en mettant en contact le mélange de sels constitués de phosphates avec de l'eau après que les blocs de phosphate de calcium et de M ont été formés.

9. Procédé selon l'une quelconque des revendications 6 à 8, dans lequel la source de calcium est le carbonate de calcium ou la chaux et la source de phosphore est un phosphate de sodium ou de

lithium, de l'acide phosphorique ou leurs mélanges.

10. Procédé selon l'une quelconque des revendications 6 à 9, dans lequel le mélange de sels formés de phosphates est maintenu entre 500°C et 780°C.

11. Procédé selon la revendication 10, dans lequel le mélange de sels formés de phosphates est maintenu entre 550°C et 750°C.

12. Masse composite que comprend 1 à 99 % en poids de phosphate de calcium et de M cristallin, comme défini dans la revendication 1, et 1 à 99 % en poids de matière polymère organique.

**Patentansprüche**

1. Kristallines Calcium-M-phosphat, worin M für Natrium oder Lithium steht, mit einer asbestartigen Form, wobei die faserförmigen Kristalle ein Verhältnis von Länge zu durchschnittlichem Durchmesser von midestens 5:1 aufweisen, wobei das Calciumnatriumphosphat charakteristische d-Abstände von etwa 0,529, 0,482, 0,339 und 0,315 nm (5,29, 4,82, 3,39 und 3,15 Å) aufweist und das Calciumlithiumphosphat charackteristische d-Abstände von etwa 0,475, 0,359, 0,340 und 0,3054 nm (4,75, 3,59, 3,40 und 3,054 Å) aufweist.

2. Phosphat nach Anspruch 1, worin das Verhältnis von Länge zu durchschnittlichem Durchmesser der Kristalle mindestens 10:1 beträgt.

3. Phosphat nach Anspruch 2, worin das Verhältnis von Länge zu durchschnittlichem Durchmesser der Kristalle mindestens 50:1 beträgt.

4. Phosphat nach Anspruch 2, worin die Kristalle einen durchschnittlichen Durchmesser zwischen 0,05 $\mu$m und 1 $\mu$m haben.

5. Phosphat nach Anspruch 4, worin die Kristalle einen durchschnittlichen Durchmesser zwischen 0,1 $\mu$m und 0,5 $\mu$m haben.

6. Verfahren zur Herstellung von kristallinem Calcium-M-phosphat, wie in Anspruch 1 definiert, das umfaßt:

a) das Zusammenbringen einer Quelle für Sauerstoff, Calcium, Phosphor und M, worin die Molverhältnisse 15 Mol-% bis 30 Mol-% $M_2O$, 48 Mol-% bis 60 Mol-% $P_2O_5$ und 20 Mol-% bis 37 Mol-% CaO betragen, unter Reaktionsbedingungen zur Herstellung einer Schmelze einer Phosphatsalzmischung;

b) das Halten der Phosphatsalzmischung bei einer Temperatur unterhalb des Schmelzpunktes des Calcium-M-phospats für eine Zeitspanne, die ausreicht für die Bildung von Blöcken aus Calcium-M-phosphat; und

c) das Zerfasern der Blöcke.

7. Verfahren nach Anspruch 6, worin die Schmelze eine Molverhältnis von 17 Mol-% bis 25 Mol-% $M_2O$, 48 Mol-% bis 53 Mol-% $P_2O_2$ und 25 Mol-% bis 32 Mol-% CaO aufweist.

8. Verfahren nach einem der Ansprüche 6 und 7, worin die Blöcke aus Calcium-M-phosphat von anderen Salzen getrennt werden, indem man die Phosphatsalzmischung mit Wasser in Kontakt bringt, nachdem sich die Blöcke aus Calcium-M-phosphat gebildet haben.

9. Verfahren nach einem der Ansprüche 6 bis 8, worin die Quelle für Calcium Calciumcarbonat oder Calciumhydroxid ist und die Quelle für Phosphor ein Natrium- oder Lithiumphosphat, Phosphorsäure oder Mischungen davon ist.

10. Verfahren nach einem der Ansprüche 6 bis 9, worin die Phosphatsalzmischung zwischen 500°C und 780°C gehalten wird.

11. Verfahren nach Anspruch 10, worin die Phosphatsalzmischung zwischen 550°C und 750°C gehalten wird.

12. Verbundmaterial, das 1 bis 99 Gew.-% kristallines Calcium-M-phosphat, wie in Anspruch 1 definiert, und 1 bis 99 Gew-% organisches polymeres Material enthält.